Europäisches Patentamt

European Patent Office

Office européen des brevets

(11) Veröffentlichungsnummer: **0 383 844 B1**

(12) **EUROPÄISCHE PATENTSCHRIFT**

(45) Veröffentlichungstag der Patentschrift: **22.09.93**

(21) Anmeldenummer: **89904007.5**

(22) Anmeldetag: **13.04.89**

(86) Internationale Anmeldenummer:
**PCT/DE89/00220**

(87) Internationale Veröffentlichungsnummer:
**WO 89/10423 (02.11.89 89/26)**

(51) Int. Cl.⁵: **C23C 4/12**, F16C 33/14

Die Akte enthält technische Angaben, die nach
dem Eingang der Anmeldung eingereicht wurden
und die nicht in dieser Patentschrift enthalten sind.

(54) **SCHICHTWERKSTOFF ODER SCHICHTWERKSTÜCK UND VERFAHREN ZU SEINER HERSTELLUNG.**

(30) Priorität: **23.04.88 DE 3813804**

(43) Veröffentlichungstag der Anmeldung:
**29.08.90 Patentblatt 90/35**

(45) Bekanntmachung des Hinweises auf die
Patenterteilung:
**22.09.93 Patentblatt 93/38**

(84) Benannte Vertragsstaaten:
**AT CH DE FR GB IT LI NL SE**

(56) Entgegenhaltungen:
**WO-A-88/00251**
**DE-B- 2 615 022**
**FR-A- 1 451 074**
**US-A- 2 998 322**

(73) Patentinhaber: **GLYCO-METALL-WERKE Glyco
B.V. & Co. KG
Stielstrasse 11, Postfach 13 03 35
D-65091 Wiesbaden-Schierstein(DE)**

(72) Erfinder: **ENGEL, Ulrich
Breslauer Str. 2a
D-6208 Bad Schwalbach(DE)**
Erfinder: **WEGNER, Karl-Heinz
Hamsterweg 10
D-6208 Bad Schwalbach(DE)**

(74) Vertreter: **Dr. Fuchs, Dr. Luderschmidt Dr.
Mehler, Dipl.-Ing. Weiss Patentanwälte
Postfach 46 60, Abraham-Lincoln-Strasse 7
D-65036 Wiesbaden (DE)**

## Beschreibung

Die Erfindung betrifft einen Schichtwerkstoff oder Schichtwerkstücke mit einer an der einen Oberfläche einer festen Trägerschicht angebrachten Funktionsschicht, insbesondere Gleitschicht, beispielsweise als feste Dispersionsschicht, mit einer Matrix mit mindestens einem aufschmelzbaren Bestandteil und Dispersionselementen, die zumindest in festem Zustand im Werkstoff der Matrix unlöslich oder nur in geringerer als vorhandener Menge löslich sind oder aus einem anderen für tribologische Zwecke anwendbaren Gemisch von nicht oder nur in geringerer als vorhandener Menge ineinanderlöslichen Bestandteilen. Die Erfindung betrifft auch ein Verfahren zur Herstellung solcher Schichtwerkstoffe und Schichtwerkstücke.

Alle bisher bekannten Schichtwerkstoffe und Schichtwerkstücke dieser Art weisen eine relativ grobe Struktur der als feste Dispersionsschicht ausgebildeten Funktionsschicht auf. Diese grobe Struktur hat daher insbesondere bei Einsatz solcher Schichtwerkstoffe und Schichtwerkstücke für tribologische Zwecke erhebliche Nachteile und Mängel. Insbesondere ist bei diesen bekannten Schichtwerkstoffen und Schichtwerkstücken die Bindung der Funktionsschicht an die Trägerschicht problematisch. Es ist zwar aus DE-OS 26 56 203 bekannt, einen für tribologische Zwecke einsetzbaren Schichtwerkstoff dadurch zu bilden, daß eine zur Entmischung neigende Dispersionslegierung, insbesondere AlSn-Dispersionslegierung, auf einem durch ein Sintergerüst gebildeten Rauhgrund thermokinetisch aufgebracht wird. Wenn - wie bei dieser Vorveröffentlichung beabsichtigt - ein Ineinandergreifen von Sintergerüst und Dispersionslegierung unter teilweisem Verschweißen hervorgerufen werden soll, ist es erforderlich, das Sintergerüst relativ dick auszubilden, was bei Ausbildung der Funktionsschicht mit geringer Dicke nicht in Betracht kommen kann.

Insgesamt wird jedoch die Verschleiß- und Korrosionsbeständigkeit solcher bekannter AlSn-Zweischicht-Verbundgleitlager aufgrund der vorliegenden Erfahrung ausgezeichnet beurteilt, wobei die Dauerfestigkeit jedoch nicht für alle Einzelfälle ausreicht.

Man hat diesen Sachverhalt Rechnung getragen, indem man Dreischichtlager mit gesputterten (Kathodenzerstäubung) AlSn-Gleitschichten entwickelt hat. Die mit diesem Verfahren erzeugten Schichten weisen eine extrem feine Sn-Verteilung und eine hohe Festigkeit auf. Bei diesen bekannten Gleitlagern mit gesputterter AlSn-Gleitschicht für die hohe Belastbarkeit eines Stahl-Bleibronzelagers mit der Verschleiß- und Korrosionsbeständigkeit von AlSn-Legierungen zwar vorteilhaft verbunden, so daß sich derartige Gleitlager im Einsatz gut bewähren. Jedoch sind die Herstellungskosten sehr hoch.

In der WO-A-88/00251 wird eine Vakuum-Plasma-Spritzverfahren für Trägerelemente mit einer Lagermetallbeschichtung beschrieben. Durch das Spritzverfahren werden Mischungslücken aufweisende Legierungen aus mindestens zwei metallischen Bestandteilen (Al/Su, Al/Pb, Cu/Pb) unmittelbar auf das Trägerelement aufgetragen. Falls die Legierung schlecht oder gar nicht auf dem Trägerlement haftet, kann jedoch auf dem Trägerelement eine Haftschicht (ca. 1 - 5 $\mu$m) aufgetragen werden.

Während die hohe Dichte der aufgespritzten Lagermetallegierung diese Trägerelemente in ihren Lagereigenschaften wesentlich verbessert, bleibt als Nachteil bestehen, daß sich nach Abnutzen der Lagermetallschicht die Laufeigenschaften abrupt verschlechtern.

Es ist daher die Aufgabe der Erfindung, einen neuartigen Aufbau für Schichtwerkstoff und Schichtwerkstücke, insbesondere Gleitlager, zur Verfügung zu stellen, mit welchem die vorteilhafte Vereinigung von hoher Belastbarkeit mit hoher Verschleiß- und Korrosionsbeständigkeit ebenfalls erreicht wird und der wesentlich verbesserte Notlaufeigenschaften aufweist, wobei jedoch dieser neue Verbundwerkstoff bzw. diese neuartigen Verbundwerkstücke kostengünstig herstellbar sein sollen, so daß sich Schichtwerkstoff bzw. Schichtwerkstücke mit derartig hoch qualifizierten Eigenschaften auch kostengünstig in Großserienproduktion herstellen lassen.

Diese Aufgabe wird bei dem erfindungsgemäßen Schichtwerkstoff bzw. den erfindungsgemäßen Schichtwerkstücken gemäß den kennzeichnenden Merkmalen des Anspruches 1 gelöst. Dabei wird die durch Luftplasmaspritzen aus feinem, die aufschmelzbaren Matrixbestandteile und die im Matrixwerkstoff nicht oder nur geringerer als vorhandener Menge löslichen Dispersionsbestandteile enthaltenden Pulver gebildete Funktionsschicht als feste Dispersionsschicht mit einer Matrix ausgebildet, in der die Dispersionselemente als feindispers verteilte Teilchen aus nicht in dem Matrixwerkstoff gelösten Bestandteilen verteilt sind, und diese Funktionsschicht ist direkt oder über eine dünne Haftvermittlerschicht auf der Oberfläche der Trägerschicht gebunden, wobei die Trägerschicht im Grenzbereich zur Funktionsschicht auf einer geringen Dicke von etwa 25 $\mu$m bis etwa 300 $\mu$m mit einem verfeinerten Gefüge ausgebildet ist.

Durch die Erfindung wird einerseits eine feindisperse Verteilung der Dispersionselemente innerhalb der Matrix der Funktionsschicht erzielt, so daß die so ausgebildete Funktionsschicht in ihren Eigenschaften, insbesondere bezüglich ihrer Verschleiß- und Korrosionsbeständigkeit den gesputterten Gleitschichten nahekommt. Andererseits wird wesentlich verbesserte Bindung der Funktionsschicht an die Trägerschicht bzw. eine evtl. zwischen Trägerschicht und Funktionsschicht vorgesehene Haftvermittlerschicht erreicht. Die durch Aufschmelzen und rasches Abkühlen hervorgerufene Strukturumwandlung in einer Oberflächenregion der Trägerschicht hat den weiteren besondere Vorteil zur Folge, daß durch eine solche Gefügeverfeinung die Dauerfestigkeit des Grundwerkstoffes gesteigert und damit die Stützwirkung für die Funktionsschicht verbessert wird. Nach Verschleiß der Funktionsschicht bzw. Gleitschicht wird wegen des feineren Gefüges noch immer eine verminderte Korrosionsanfälligkeit an der freien Oberfläche der Trägerschicht erreicht. Außerdem bietet auch die Trägerschicht an ihrer Oberflächenregion mit verfeintem Gefüge erheblich verbesserte Gleiteigenschaften bzw. Notlaufeigenschaft als sie mit einer Trägerschicht mit dem anfänglichen Gefüge erreichbar wären.

In bevorzugter Ausführungsform der Erfindung besteht die Trägerschicht aus Metall und enthält Bestandteile, die im Metall der Trägerschicht unlöslich oder nur in geringerer als vorhandener Menge löslich sind, wobei diese Bestandteile im Grenzbereich zur Funktionsschicht in wesentlich feinerer Verteilung in das Metall der Trägerschicht eingelagert sind als im übrigen Teil der Trägerschicht. Insbesondere ist bei solcher bevorzugter Ausführungsform der Erfindung die Trägerschicht aus Dispersionslegierung mit metallischer Matrix und eingelagerten aufschmelzbaren Dispersionsbestandteile im Grenzbereich der Trägerschicht zur Funktionsschicht in feindisperser Verteilung in die Matrix der Dispersionslegierung eingefroren sind. Die Trägerschicht kann dabei speziell aus aufgegossener oder aufgesinterter Bleibronze mit Bleigehalt bis zu 40 Gew.-%, vorzugsweise zwischen 15 Gew.-% und 30 Gew.-%, bestehen. Bisher lassen sich Bleibronzen nur bis ca. 25 Gew.-% Bleianteil gießplattieren. Auf pulvermetallurgischem Wege und Sintern sind BleibronzeVerbundwerkstoffe mit über 30% Gewichtsanteil Blei herstellbar. Durch die Erfindung können sowohl bei gießplattierten als auch bei aufgesinterten Bleibronzeschichten wesentlich verbesserte Gleiteigenschaften bzw. Notlaufeigenschaften in dem der Gleitschicht zugewandten Oberflächenbereich eingestellt werden, indem Zusammen mit dem Aufbringen der Gleitschicht eine Feinung des Gefüges in der Oberflächenregion der Trägerschicht vorgenommen wird.

Im Rahmen der Erfindung kann die Funktionsschicht als Dispersionsschicht ausgebildet sein, deren Matrix mindestens einen der folgenden metallischen Bestandteile:
Aluminium, Kupfer, Zink

und deren Dispersionselemente mindestens einen der folgenden Bestandteile aufweisen:
Blei, Zinn, Indium, Wismut, Molybdän, Molybdändisulfid (vorzugsweise in Form von mit Metall umhüllten Teilchen), Bornitrid, Kohlenstoff (insbesondere in Form von mit Metall wie Nickel, Aluminium, Kupfer umhüllten Graphitteilchen), für tribologische Zwecke anwendbaren Kunststoff, wie Polyester, PTFE, PEK, PEEK. Überraschender Weise läßt sich bei den durch Auswahl aus den obigen Stoffgruppen zusammenstellenden Stoffkombinationen eine sehr fein disperse Verteilung der Dispersions elemente hin bis zu hohen Konzentrationen erreichen. Gleichzeitig läßt sich eine gewünschte Gleitschichthärte zwischen 60 HV und 80 HV einstellen, wenn die Abkühlrate in der durch Plasmaspritzen aufgebrachten Funktionsschicht zwischen $10^2$ K/s und $10^5$ K/s eingestellt wird. Die erforderliche Abkühlungsrate läßt sich durch geeignete Abstimmung der Pulverfraktion, des Massestromes von Pulver und Prozeßgas, der Prozeßgasmischung, der Spritzzyklenfolge und der Funktionsschichtdicke auf die Dicke und dem Werkstoffaubau des Substratträgers gezielt einstellen.

Um die Haftung der Funktionsschicht zu verbessern, kann zwischen der Trägerschicht und der Funktionsschicht eine dünne Haftvermittlerschicht vorgesehen sein, die metallische Bestandteile enthält, die untereinander und/oder mit metallische Bestandteilen der Trägerschicht und/oder metallischen Bestandteilen der Funktionsschicht exotherm reagieren. Hierzu kommt beispielsweise in Betracht, daß die Haftvermittlerschicht einen oder mehrere der folgenden Bestandteile enthält: Molybdän, Nickel/Aluminium-Legierung, Nickel/Aluminid, Nickel/Chrom-Legierung, Nickel/Kupfer-Legierung, Reinaluminium, Aluminiumlegierung wie beispielsweise AlSi8. Die Haftvermittlerschicht kann dabei als geschlossene Schicht durch Luftplasmaspritzen auf die die Funktionsschicht aufnehmende Seite der Trägerschicht aufgebracht sein. Es ist auch denkbar, daß die Haftvermittlerschicht in Art eines Rauhgrundes als einfache Lage oder wenige Lagen von feinen Teilchen auf die die Funktionsschicht aufnehmende Seite der Trägerschicht aufgesintert ist.

Bevorzugt ist die Erfindung für die Herstellung tribologischer Elemente anzuwenden. Dabei kann die Trägerschicht in Art der Mittelschicht eines Dreischichtgleitlagers an ihrer einen Seite auf einem Substrat, beispielsweise einem Stahlrücken angebracht sein, und an ihrer anderen Seite die in Art einer Gleitschicht oder Einlaufschicht ausgebildete Funktionsschicht tragen. Als besonders vorteilhafte Einsatzmöglichkeit kommt dabei in Betracht, daß der in Art einer Mittelschicht ausgebildete Teil der Trägerschicht aus Bleibronze, Bleizinnbronze oder Zinnbronze und die als Gleit-

schicht oder Einlaufschicht ausgebildete Funktions-schicht aus Dispersionslegierung auf Aluminium/Blei-Grundlage oder Aluminium/Zinn-Grundlage bestehen, wobei die Funktionsschicht eine Dicke zwischen etwa 10 $\mu$m und 100 $\mu$m, vorzugsweise zwischen 15 $\mu$m und 50 $\mu$m, auf-weist.

Für die Herstellung des erfindungsgemäßen Schichtwerkstoffes bzw. der erfindungsgemäßen Schichtwerkstücke ist von einem Verfahren auszugehen, bei dem die Funktionsschicht aus metallischer Dispersionslegierung oder mit anderer für tribologische Zwecke anwendbarer Struktur durch Luftolasmspritzen aus feinem Werkstoffpulver ge-bildet wird. Ein aus DE-OS 26 56 203 bereits bekanntes Verfahren dieser Art läßt sich jedoch nicht für die Herstellung erfindungsgemäßer Werkstoffe oder Werkstücke anwenden, insbesondere dann nicht, wenn die Trägerschicht selbst eine heterogene Struktur, beispielsweise in Art einer Dispersionslegierungsschicht aufweist. Beim erfindungsgemäßen Verfahren wird daher die Funktionsschicht als Dispersionslegierung oder mit anderer für tribologische Zwecke anwendbarer Struktur im Luftplasmaspritzen direkt auf die Oberfläche der Trägerschicht oder auf eine vorher gebildete dünne Haftvermittlerschicht aufgetragen, wobei während des Plasmaspritzens der Abstand der Plasmaflamme von der zu belegenden Oberfläche in Abstimmung mit der verfügbaren Anlagen-Leistung und der Art des jeweils verarbeiteten Werkstoffpulvers derart eingestellt und aufrecht erhalten wird, daß das Metall der Trägerschicht in deren Oberflächenbereich auf eine Tiefe zwischen etwa 25 $\mu$m und etwa 300 $\mu$m durch die Plasmaflamme aufgeschmolzen wird, wobei ein sich unmittelbar an das Plasmaspritzen anschließendes Kühlen mit einer in der Spritzschicht und dem aufgeschmolzenen Bereich der Trägerschicht wirksamen, hohen, im Hinblick auf die Schrumpfeigenschaften der Trägerschicht, der Haftvermittlerschicht und der gebildeten Funktionsschicht sowie deren gegenseitigen Bindungszonen zulässigen Abkühlrate (Abkühlgeschwindigkeit) zwischen $10^2$ K/s und $10^5$ K/s, vorzugsweise zwischen $10^3$ K/s und $5 \cdot 10^4$ K/s vorgenommen wird. Durch die beim Plasmaspritzen der Funktionsschicht angewandte Energie, die ausreicht, die Trägerschicht noch in einer dünnen Oberflächenregion aufzuschmelzen, wird eine optimale Bindung zwischen der Trägerschicht und der Funktionsschicht gewährleistet, zumal wenn noch eine dünne Haftvermittlerschicht zwischen der Trägerschicht und der Funktionsschicht vorgesehen wird. Durch das unmittelbar an das Plasmaspritzen anschließende rasche Abkühlen sowohl der aufgeschmolzenen Oberflächenregion der Trägerschicht als auch der gebildeten Funktionsschicht kommt es zu einer feindispersen Verteilung der Dispersionselemente in der Matrix und Einfrieren der Matrix mit den Dispersionselementen in diesem Zustand. Außerdem werden die durch exotherme Reaktionen gebildeten chemischen und quasichemischen Verbindungen in der Blndungszone bzw. in den Bindungszonen durch das schnell einsetzende, wirkungsvolle Kühlen gehemmt, so daß ein sehr engmaschiges Netz von Diffusionsbindungsbereichen ausgebildet wird.

Die Funktionsschicht kann im Rahmen der Erfindung durch Luftplasmaspritzen aus einem Pulvergemenge gebildet werden, das die aufschmelzbaren Matrixbestandteile und die in der Matrix zu verteilende, in deren Werkstoff unlöslichen oder nur in geringerer als vorhandener Menge löslichen Bestandteile enthält. Man kann im erfindungsgemäßen Verfahren auch stattdessen oder zusätzlich die Funktionsschicht durch Luftplasmaspritzen aus mit oder ohne organische Binder agglomeriertem Pulver (Mikropellets) bilden, wobei auch dieses agglo-merierte Pulver die aufschmelzbaren Matrixbe-standteile und die in der Matrix zu verteilenden, in deren Werkstoff unlöslichen oder in geringerer als vorhandener Menge löslichen Bestandteile enthalten soll. Das benutzte Pulvergemenge oder Pulveraggregat kann Pulverteilchen mit Umhüllung durch zusätzliche Stoffe enthalten. Solche Umhüllung kann beispielsweise mittels Kleber auf den Pulverteilchen angebracht sein. Das zu verarbeitende Pulver kann an einer einzigen Stelle der Plasmaflamme zugeführt werden. Es ist aber auch möglich, unterschiedliche Pulver gleichzeitig zu verarbeiten und ggf. an getrennten Stellen der Plasmaflamme zuzuführen.

Zusätzlich zu den in der Matrix zu verteilenden Dispersionselementen können auch noch Hartteilchen mit Größe zwischen etwa 10 $\mu$m und 200 $\mu$m, vorzugsweise 10 $\mu$m - 100 $\mu$m, insbesondere 20 - 50 $\mu$m, in die Funktionsschicht eingelagert werden. Diese einzulagernden Hartteilchen werden im erfindungsgemäßen Verfahren vorzugsweise ebenfalls in die Plasmaflamme eingeführt. Es kommen hierzu Hartteilchen, u.a. metallische Bestandteile, insbesondere Oxide, in Betracht, die aus einem oder mehreren der Stoffe aus der Gruppe TiC, WC, Glasmehl, $Si_3N_4$, SiC, $Al_2O_3$ bestehen. Stattd-essen oder zusätzlich kommen auch Hartteilchen auf der Basis von Laves-Phasen ($AB_2$), vorzugswei-se vom Typ $MgCu_2$ oder vom Typ $MgZn_2$ oder $MgNi_2$ in Betracht, wobei das Radius Verhältnis der A-Atome und B-Atome $r_A/r_B = 1{,}225$ beträgt.

Anstatt oder zusätzlich zu dem Einführen von Hartteilchen in die Plasmaflamme können auch in die Funktionsschicht einzulagernde Hartteilchen durch reaktives Plasmaspritzen, d.h. durch Ausführung von chemischen oder quasichemischen Reaktionen während des Plasmaspritzens erzeugt werden. Falls das für die Bildung der Funktionsschciht eingesetzte Werkstoffpulver Bestandteile enthält, die harte Oxidteilchen und/oder harte Nitridteilchen zu bilden vermögen, können der beim Plasmaspritzen aufrecht erhaltene Massestrom und die Zusammensetzung des Prozeßgases auf einen vorher bestimmten Umfang chemischer Reaktionen oder quasichemischer Reaktionen dieser Bestandteile mit der Umgebungsluft, d.h. dem Luftsauerstoff und/oder Luftstickstoff abgestimmt werden. Es ist aber auch für die Erzeugung von Hartteilchen während des Luftplasmaspritzens bei Einsatz von Werkstoffpulver mit harte chemische Verbindungen oder quasichemischen Verbindungen mit gasförmigen Reaktionsstoffen bildenden Bestandteilen möglich, für das Plasmaspritzen der Funktionsschicht dem zur Bildung der Plasmaflamme eingesetzten Prozeßgas solche gasförmige Reaktionsstoffe in vorher festgelegter, auf den beim Plasmaspritzen aufrecht erhaltenen Massestrom abgestimmter Menge zuzumischen.

Die Funktionsschicht kann im Rahmen der Erfindung durch Luftplasmaspritzen aus einem Pulvergemenge gebildet werden, das die aufschmelzbaren Matrixbestandteile aus Dispersionslegierung mit metallischer Matrix aus einem oder mehreren der Metalle: Aluminium, Kupfer, Zink, Silber und Dispersionselementen mindestens eines der folgenden Bestandteile: Blei, Zinn, Indium, Wismut, Nickel, Kupfer, Mangan, Silicium, Kohlenstoff (vorzugsweise in Form von mit Metall wie Nickel, Aluminium, Kupfer umhüllten Graphitteilchen), Molybdändisulfid (vorzugsweise mit Metall umhüllt), Bornitrid, Kunststoff wie Polyester, PTFE, PEK, PEEK, auf eine Eisen enthaltende Trägerschicht, vorzugsweise einer Trägerschicht aus beruhigtem Stahl durch Luftplasmaspritzen aufgebracht werden, wobei das Kühlen mit einer Kühlrate zwischen $10^3$ K/s und $5 \cdot 10^4$ K/s vorgenommen wird.

Falls eine dünne Haftvermittlerschicht zwischen der Trägerschicht und der Funktionsschicht erwünscht oder erforderlich ist, kann diese in Art eines Rauhgrundes als eine oder wenige Lagen feiner Teilchen auf die durch Luftplasmaspritzen zu beschichtende Oberfläche der Trägerschicht aufgesintert werden. Es ist jedoch nicht erforderlich, eine rauhe Haftvermittlerschicht auszubilden. Es kommen auch in anderer Weise aufgebrachte Haftvermittlerschichten, beispielsweise galvanisch aufgebrachte Haftvermittlerschichten oder auch bevorzugt Haftvermittlerschichten in Betracht, die durch Luftplasmaspritzen auf der mit der Funktionsschicht zu belgenden Oberfläche der Trägerschicht angebracht sind, wobei die Trägerschicht auf geringe Tiefe zwischen 25 $\mu$m und 300 $\mu$m aufgeschmolzen und dabei eine Kühlung unter Einhaltung einer Kühlrate zwischen $10^2$ K/s und $10^5$ K/s vorgenommen wird.

In allen Fällen kann eine Haftvermittlerschicht aufgebracht werden, die metallische Bestandteile enthält, die untereinander und/oder mit metallischen Bestandteilen der danach aufzubringenden Funktionsschicht exotherm reagieren. Hierzu kommen in Betracht Haftvermittlerschichten aus einem oder mehrere der folgenden Stoffe: Molybdän, Nickel/Aluminium-Legierung, Nickel/Chrom-Legierung, Nickel/Kupfer-Legierung, Reinaluminium, Aluminiumlegierung, wie beispielsweise AlSi8.

Um den gewünschten begrenzten Ablauf exotherme Reaktionen chemischer oder quasichemischer Art und die Ausbildung einer feinen Struktur in der Dispersion der Funktionsschicht zu beherrschen, empfiehlt es sich, hochwirksame Kühlung während und/oder sofort anschließend an das Beschichten durch Luftplasmaspritzen auszuführen. Dies kann mittels Kühlwalzen vorgenommen werden, mit denen die Trägerschicht des Schichtwerkstoffes bzw. Schichtwerkstücke in wärmeleitender Berührung gehalten ist. Eine noch stärkere Kühlung läßt sich erreichen, wenn die Trägerschicht an der nicht beschichteten Seite mit flüssigem oder gasförmigem Kühlmedium in Berührung gebracht wird. Zusätzlich kann auch noch gasförmiges Medium auf die frisch gebildete Funktionsschicht geführt werden.

Ausführungsbeispiele der Erfindung werden im folgenden anhand der Zeichnung näher erläutert. Es zeigen:

Fig. 1    eine schliffbildartige Teilschnittdarstellung einer ersten Ausführungsform des erfindungsgemäßen Schichtwerkstoffs;

Fig. 2    eine schliffbildartige Teilschnittdarstellung einer zweiten Ausführungsform des erfindungsgemäßen Schichtwerkstoffs;

Fig. 3    die schematische Darstellung einer ersten Ausführungsform des erfindungsgemäßen Verfahrens und

Fig. 4    das Schema einer zweiten Ausführungsform des erfindungsgemäßen Verfahrens.

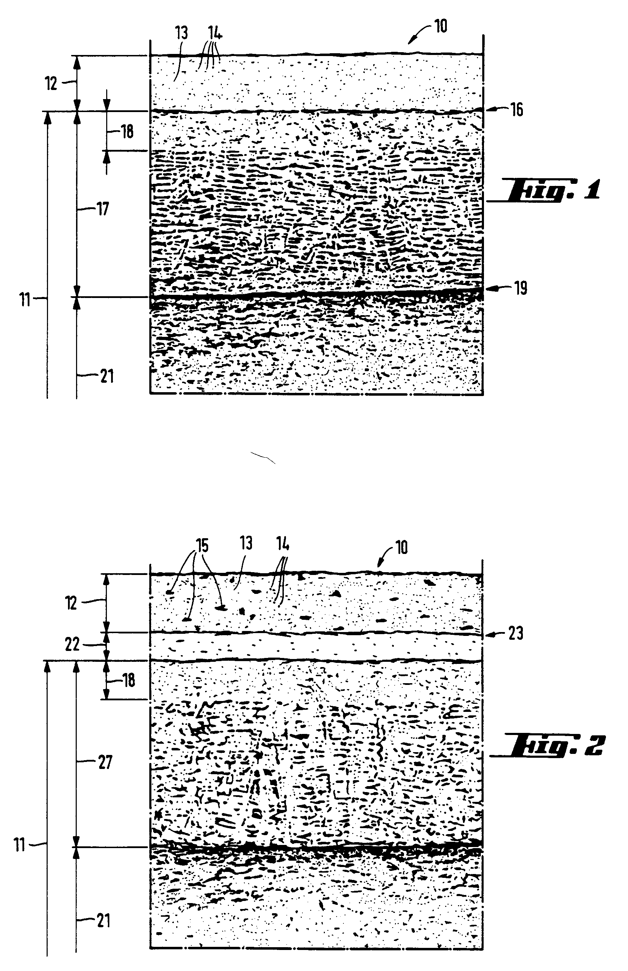

Im Beispiel der Figur 1 ist der Schichtwerkstoff 10 für die Herstellung von tribologischen Elementen, insbesondere Gleitlagern, vorgesehen. Dementsprechend weist der Schichtwerkstoff 10 eine Trägerschicht 11 aus beruhigtem Stahl auf, die nach der Verarbeitung den Stahlrücken der aus dem Schichtwerkstoff 10 hergestellten Gleitlager bildet. Auf der Trägerschicht 11 ist eine aufgegossene Schicht 17 aus gute Notlaufeigenschaften aufweisendem Gleitlagerwerkstoff, in diesem Beispiel aus Bleizinnbronze mit 10 Gew.-% Bleigehalt, 10 Gew.-% Zinn und Rest Kupfer vorgesehen. Diese Bleibronze-Schicht 17 stellt einen Teil der Trägerschicht für die darauf angebrachte Funktionsschicht 12 dar. Die Funktionsschicht 12 besteht im dargestellten Beispiel aus einer Aluminium/Blei-Dispersionslegierung, beispielsweise mit einem Bleigehalt bei 15 Gew.-%. Dementsprechend weist die Funktionsschicht eine Matrix 13 aus Aluminium und innerhalb dieser Matrix in fein disperser Verteilung Bleiteilchen 14 auf. Bei diesem Aufbau weist die Funktionsschicht 12 eine Härte von etwa 50 HV auf.

Unter der Funktionsschicht 12 ist eine Oberflächenregion 18 der Bleizinnbronze-Schicht 17 mit verfeintem Gefüge gebildet. Während der übrige Teil der Bleizinnbronze-Schicht 17 dentritisches Gefüge aufweist, ist in dieser Oberflächenregion 18 eine disperse feine Verteilung von Blei- und Zinnteilchen in einer Kupfermatrix gebildet.

Diese Oberflächenregion 18 ist dadurch gebildet, daß beim Auftragen der Funktionsschicht 12 durch Luftplasmaspritzen die Bleizinnbronze-Schicht an ihrer freien Oberfläche auf eine der Oberflächenregion 18 entsprechende Tiefe, d.h. etwa 50μm Tiefe durch die Plasmaflamme in einem sehr kleinen, mit dem relativen Vorschub wandernden Bereich aufgeschmolzen und das dabei gebildete kleine Schmelzebad sofort nach dem Aufbringen der Funktionsschicht 12 in diesem Bereich zusammen mit dem aufgebrachten Teil der Funktionsschicht 12 sehr rasch abgekühlt worden ist. Dadurch wurde die Bleizinnbronze in der Oberflächenregion 18 in feiner disperser Verteilung des Bleis und Zinns in der Kupfermatrix eingefroren. Ebenso wurden die Bleiteilchen in der Matrix 13 der Funktionsschicht 12 in feindisperser Form eingefroren, bevor das Blei zu größeren Bleiteilchen koagulieren konnte.

In der Bindungszone 16 zwischen der Oberflächenregion 18 und der Funktionsschicht 12 ist eine Mischdispersion von Aluminium, Blei, Zinn und Kupfer vorhanden, weil bei dem Luftplasmaspritzen Teilchen des die Bestandteile der Funktionsschicht 12 enthaltenden feinen Werkstoffpulvers in das in der Oberflächenregion der Bleizinnbronze-Schicht 17 gebildete örtliche Schmelzebad mit kinetischer Energie eingebracht werden. Es ergibt sich hieraus eine besonders wirksame, dauerhafte Bindung der Funktionsschicht 12 auf der Oberflächenregion 18 der Bleizinnbronze-Schicht 17. In der zweiten Bindungszone 19, die innerhalb der Trägerschicht zwischen dem Stahl und der Bleizinnbronze-Schicht 17 liegt, besteht eine beim Aufgießen der Bleizinnbronze-Schicht 17 auf den Stahlrücken erzeugte Diffusionsbindung. Im Interesse der Erzeugung dieser Diffusionsbindung war bei Herstellung des Stahl/Bleizinnbronze-Verbundes ausreichendes Erhitzen des Stahles und eine entsprechend langsames Abkühlen in Kauf zu nehmen, obwohl hierdurch in der Bleizinnbronze-Schicht 17 das in Figur 1 ersichtliche dentritische Gefüge entstanden ist.

Durch die nachträgliche Ausbildung der Oberflächenregion 18 mit disperser Verteilung von Blei und Zinn in der Kupfermatrix, sind die Nachteile des dentritischen Gefüges im übrigen Teil der Bleizinnbronze-Schicht 17 praktisch aufgehoben. Zusätzlich zu verbesserten Gleitlagereigenschaften und zusätzlich zu verbessertem Korrosionsschutz bietet die unmittelbar unter der Funktionsschicht 12 gebildete Oberflächenregion mit disperser Verteilung von Blei und Zinn in der Kupfermatrix auch einen verbesserten Untergrund für die Funktionsschicht mit der oben beschriebenen verbesserten Bindung.

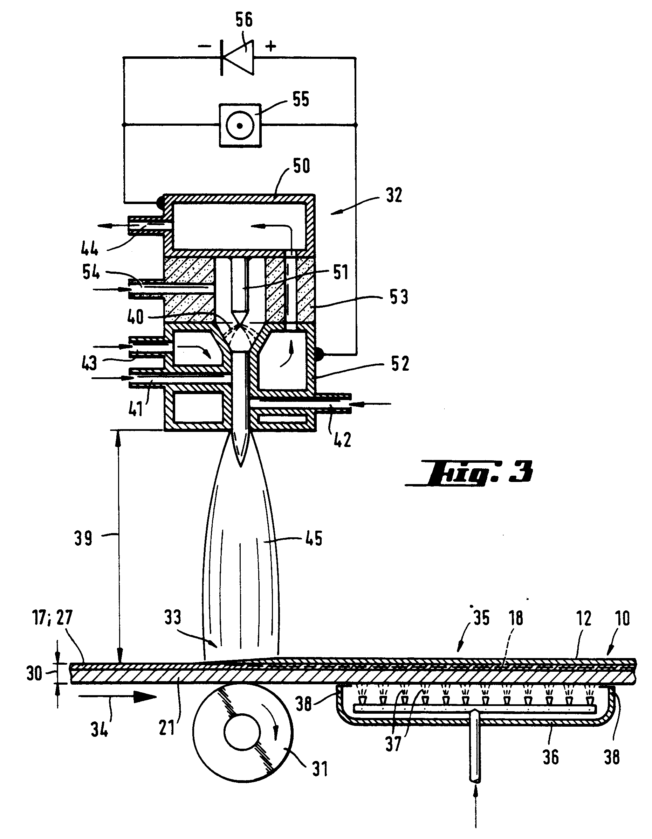

Im Beispiel der Figur 2 handelt es sich ebenfalls um Schichtwerkstoff 10, der für die Herstellung von tribologischen Elementen, insbesondere Gleitlagern, vorgesehen ist. In diesem Beispiel weist der Schichtwerkstoff 10 zwischen seiner durch einen Stahlrücken 21 und eine Bleibronze-Schicht 27 gebildeten Trägerschicht 11 eine Haftvermittlerschicht 22 auf, die in diesem Beispiel aus Nickelkupferlegierung besteht Sie könnte jedoch auch aus Molybdän, Nickel/Aluminium-Legierung, Nickelaluminid, Nickel/Chrom-Legierung, Reinaluminium oder einer Aluminiumlegierung mit beispielsweise AlSi8 bestehen. Diese Haftvermittlerschicht 22 ist durch Luftplasmaspritzen auf die freie Oberfläche der BleibronzeSchicht 27 aufgebracht. Hierbei wurde der Plasmabrenner so eingestellt, daß die Bleibronzeschicht 27 auf eine Tiefe von etwa 50μm örtlich aufgeschmolzen wurde, nämlich gerade an derjenigen Stelle an der die Haftvermittlerschicht 22 gerade erzeugt wurde. Ein wesentlicher Anteil der Teilchen des für die Haftvermittlerschicht 22 benutzten feinen Werkstoffpulvers wurde dabei in das örtliche Schmelzebad in der Oberflächenregion 18 der Bleibronze-Schicht mit kinetischer Energie eingebracht, so daß eine sehr feste Bindung zwischen der Haftvermittlerschicht 22 und der Bleibronze-Schicht 27 hervorgerufen wurde. Die Oberflächenregion der BleibronzeSchicht 27 wurde zusammen mit der aufgebrachten Haftvermittlerschicht 22 sehr rasch abgekühlt, so daß die Bleibronze nicht mehr in das dentritische Gefüge zurückkehren konnte, sondern mit disperser Verteilung der Bleiteilchen in der Kupfermatrix eingefroren wurde.

Die Bleibronze-Schicht 27 selbst ist durch Aufgießen auf dem Stahlrücken 21 angebracht und hat wie bei herkömmlichen Aufgießverfahren eine Diffusionsbindung der Kupfer-Kristallite mit dem Stahl.

Auf die Haftvermittlerschicht 22 ist die Funktionsschicht 12 durch Luftplasmaspritzen aufgebracht. Bei diesem Vorgang war der Plasmabrenner so eingestellt, daß er die Oberfläche der Haftvermittlerschicht 22 örtlich bis nahe an den Schmelzpunkt der Nickelkupferlegierung heran erhitzte. Es ist deshalb auch in der Bindungszone 23 zwischen der Haftvermittlerschicht 22 und der Funktionsschicht 12 eine intensive Diffusionsbindung zwischen der Nickel/Kupfer-Legierung und dem Aluminium der Matrix 13 der Funktionsschicht 12 gebildet worden.

Im Beispiel der Figur 2 enthält die Funktionsschicht 12 außer den feindispers in der Matrix 13 verteilten Bleiteilchen auch zusätzlich eingelagerte Hartteilchen 15 in Form von Laves-Phasen. Diese Hartteilchen 15 haben eine Größe von etwa 20 bis 30µm und die Form von Whisker. Durch diesen Aufbau konnte die Funktionsschicht auf eine Härte von etwa 75 HV eingestellt werden.

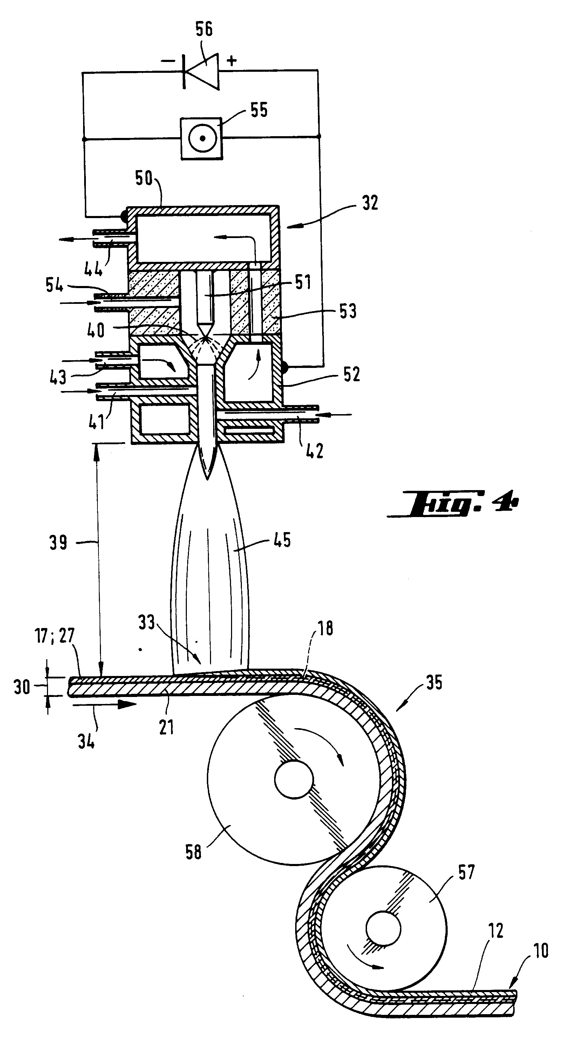

Figur 3 zeigt ein Schema für ein Herstellungsverfahren für den in den Figuren 1 und 2 dargestellten Schichtwerkstoff 10. Nach dieser Verfahrensvariante wird ein Verbundband 30 mit Stahlrücken 21 und aufgegossener Bleizinnbronze-Schicht 17 und der Bleibronze-Schicht 27 über eine Stützrolle 31 an einem Plasmabrenner 32 vorbeigezogen, derart, daß die Stahlrücken 21 über die Stützrolle 31 geführt wirde und die Bleibronze-Schicht 27 bzw. Bleizinnbronze-Schicht 17 dem Plasmabrenner 32 zugewandt ist. In dem dem Plasmabrenner 32 gegenüberliegenden Teil des Verbundbandes 30 wird ein Beschichtungsbereich 33 gebildet, an den sich in der durch den Pfeil 34 angedeuteten Vorschubrichtung des Verbundbandes 30 unmittelbar ein Kühlbereich 35 anschließt. In diesem Kühlbereich 35 wird das Verbundband mit seiner unbeschichteten Seite an einem Kühlkasten 36 vorbeigeführt, in dessen Inneren Strahlen 37 von Kühlgas, beispielsweise Kohlendioxid, evtl. vermischt mit Trockeneis, oder Strahlen von Kühlflüssigkeit, beispielsweise Wasser oder Öl, gegen die nicht beschichtete Oberfläche des Verbundbandes 30 gerichtet sind. Bevorzugt ist die räumliche Anordnung derart getroffen, daß das Stahl band 30 unterhalb des Plasmabrenners 32 horizontal vorbeigeführt und dabei an der Oberseite beschichtet wird, während der Kühlkasten 36 der Unterseite des Verbundbandes 30 gegenübergestellt ist. Zur Erhöhung der Kühlwirkung und zum Auffangen von Kühlflüssigkeit ist im dargestellten Beispiel der Kühlkasten an seinem Umfang mit gegen die Unterseite des Verbundbandes 30 vorgezogenen streifenförmigen Umfangswandteilen 38 ausgebildet.

Der Abstand 39 des Plasmabrenners 32 vom Verbundband 30 ist einstellbar und im dargestellten Beispiel derart eingerichtet, daß die dem Plasmabrenner 32 zugewandte Bleibronze-Oberfläche oder Bleizinnbronze-Oberfläche des Verbundbandes 30 durch die Plasmaflamme 45 auf eine Tiefe von etwa 50µm aufgeschmolzen wird. Auf dieses kleine, engbegrenzte Schmelzebad von Bleibronze oder Bleizinnbronze wird der feinteilige, pulverförmige Beschichtungswerkstoff mit kinetischer Energie durch die Plasmaflamme 45 aufgebracht. Durch den Vorschub des Verbundbandes 30 im Sinne des Pfeiles 34 wird auf diese Weise fortlaufend eine Oberflächenregion 18 in der Bleibronzeschicht 17 bzw. Bleizinnbronze-Schicht 27 ausgebildet und nach Verlassen des Beschichtungsbereiches 33 gemeinsam mit der durch Plasmaspritzen aufgebauten Funktionsschicht 12 sehr rasch abgekühlt, so daß in der Oberflächenregion 18 die Neubildung des dentritischen Gefüges der Bleibronze bzw. Bleizinnbronze nicht mehr stattfinden kann, sondern ein Einfrieren in Art einer feinen Dispersion erfolgt. In der frisch aufgebauten Funktionsschicht kommt es durch das rasche Abkühlen nicht mehr zum Koagulieren von ungelösten Bestandteilen, vielmehr werden Bleiteilchen und sonstige ungelöste Teilchen in feindisperser Verteilung in der Matrix der Funktionsschicht eingefroren.

Im Beispiel der Figur 3 ist der Plasmabrenner 32 mit einem Elektrodenteil 50 mit Kathode 51 und einem die Anode bildenden Düsenteil 52 ausgestattet. Zwischen dem Elektrodenteil 50 und dem Düsenteil 52 ist ein Isolierteil 53 eingesetzt, der den Einlaß 54 für das Plasmagas enthält. Der Elektrodenteil 50 und der Düsenteil 52 sind an einen elektrischen Hochspannungserzeuger angeschlossen, der einen Hochfrequenz-Hochspannungsgenerator 55 und einen Hochspannungsgleichrichter 56 enthält. Mit der so erzeugten elektrischen Hochspannung wird zwischen der Kathode 51 und dem Düsenteil 52 ein Lichtbogen 40 gezündet, durch den das bei 54 eingeführte Plasmagas hindurchgeführt wird und auf diese Weise die aus dem Düsenteil 52 austretende und auf das zu beschichtende Stahlband 30 gerichtete Plasmaflamme 45 bildet. Innerhalb des Düsenteiles 52 wird bei 41 das für die Bildung der Funktionsschicht 12 vorgesehene, feine Werkstoffpulver eingeführt. Es kann sich hierbei um eine Pulvergemenge handeln oder auch um ein feines Pulveragglomerat, in welchem die für die Bildung der Funktionsschicht vorgesehenen Bestandteile vereinigt sind. Es ist aber auch möglich, der Plasmaflamme unterschiedliche Pulver zuzuführen und zwar Pulver der einen Art bei 41 und Pulver einer zweiten Art bei 42. Beispielsweise können auch in diese zweite Zuführung 42 die Hartteilchen eingeführt werden, die in die zu bildende Funktionsschicht eingelagert werden sollen.

Wie durch den Einlaß 43 und den Auslaß 44 angedeutet, wird der Plasmabrenner 32 mit Wasser gekühlt.

Die in Figur 4 wiedergegebene Verfahrensvariante sieht praktisch den gleichen Plasmabrenner 32 wie im Beispiel der Figur 3 vor, jedoch unterscheidet sie sich von der Verfahrensvariante gemäß Figur 3 in der Art der benutzten Kühleinrichtungen. Auch im Beispiel der Figur 4 wird ein zu beschichtendes Verbundband im Sinne des Pfeiles 34 in einem Abstand 39 unter dem Plasmabrenner 32 vorbeibewegt, so daß an der Oberseite des Verbundbandes 30 ein dem Plasmabrenner gegenüberliegender Beschichtungsbereich 33 gebildet wird, in welchem das Verbundband 30 an seiner zu beschichtenden Oberfläche der Bleibronze-Schicht 27 bzw. Bleizinnbronze-Schicht 17 unter dem Einfluß der Plasmaflamme 45 ist. In diesem Beschichtungsbereich wird die Bleibronze-Schicht 27 bzw. die Bleizinnbronze-Schicht 17 in einer Oberflächenregion 18 von beispielsweise 50μm Tiefe durch die Plasmaflamme aufgeschmolzen und zugleich über dem und in der Umgebung des so gebildeten kleinen, eng begrenzten Schmelzebades mit dem feinpulvrigen Beschichtungswerkstoff überschichtet, bis die Funktionsschicht 12 aufgebaut ist. Sobald das Verbundband 30 bei seinem Vorschub im Sinne des Pfeiles 34 den Beschichtungsbereich 33 verläßt, gelangt es in den Kühlbereich 35. Dort wird das beschichtete Verbundband 30 bzw. der so gebildete Schichtwerkstoff 10 unter Benutzung einer Umlenkrolle 57 mit seiner unbeschichteten Stahloberfläche über eine gekühlte Walze 58 gezogen. Diese Kühlwalze 58 kann beispielsweise mit Wasser oder sonstigem Kühlmedium gekühlt sein. Auch mit dieser Kühleinrichtung läßt sich ein intensives Kühlen des durch Luftplasmaspritzen erzeugten Schichtwerkstoffs 10 erreichen, wobei evtl. in der in Figur 3 angedeuteten Verfahrensweise eine etwas höhere Kühlrate erreichbar ist. In jedem Fall wird aber bei beiden Verfahrensvarianten eine feindisperse Verteilung der in der Matrix ungelösten Bestandteile der Funktionsschicht 12, eine disperse Verteilung von Blei und evtl. Zinn in der Oberflächenregion 18 der Bleibronze-Schicht 27 bzw. Bleizinnbronze-Schicht 17 sowie eine sichere Bindung der Funktionsschicht 12 auf der Oberflächenregion 18 der Bleizinnbronze-Schicht 17 bzw. Bleibronze-Schicht 27 gewährleistet.

**Patentansprüche**

1. Schichtwerkstoff oder Schichtwerkstück mit einer an der einen Oberfläche einer festen Trägerschicht angebrachten Funktionsschicht, insbesondere Gleitschicht, beispielsweise als feste Dispersionsschicht mit einer Matrix mit mindestens einem aufschmelzbaren Bestandteil und Dipersionselementen die zumindest in festem Zustand im Werkstoff der Matrix unlöslich oder nur in geringerer als vorhandener Menge löslich sind, oder aus einem anderen für tribologische Zwecke anwendbaren Gemenge von nicht oder nur in geringerer als vorhandener Menge ineinander löslichen Bestandteilen, wobei die durch Luftplasmaspritzen aus feinem, die aufschmelzbaren Matrixbestandteile und die im Matrixwerkstoff nicht oder nur in geringerer als vorhandener Menge löslichen Dispersionsbestandteile enthaltendem Pulver gebildete Funktionsschicht (12) als feste Dispersionsschicht mit einer Matrix (13) ausgebildet ist, in der die Dispersionselemente als fein dispers verteilte Teilchen (14) aus nicht in dem Matrixwerkstoff gelösten Bestandteilen verteilt sind, und diese Funktionsschicht (12) direkt oder über eine Haftvermittlerschicht (22) auf der Oberfläche der Trägerschicht gebunden ist, dadurch gekennzeichnet, daß die Trägerschicht (11) durch unmittelbares Abkühlen des während des Luftplasmaspritzens durch die Plasmaflamme aufgeschmolzenen Trägermaterials mit einer Abkühlrate zwischen $10^2$ und $10^5$ K/s erhalten wird und daß die Trägerschicht im Grenzbereich (18) zur Funktionsschicht (12) auf einer geringen Dicke von etwa 25 μm bis etwa 300 μm mit einem verfeinerten Gefüge ausgebildet ist.

2. Schichtwerkstoff oder Schichtwerkstück nach Anspruch 1, dadurch gekennzeichnet, daß die Trägerschicht (11) aus Metall besteht und Bestandteile enthält, die im Metall der Trägerschicht (11) unlöslich oder nur in geringerer als vorhandener Menge löslich sind und daß diese Bestandteile im Grenzbereich (18) zur Funktionsschicht (12) in wesentlich feinerer Verteilung in das Metall der Trägerschicht eingelagert sind als im übrigen Teil der Trägerschicht (11).

3. Schichtwerkstoff oder Schichtwerkstück nach Anspruch 2, dadurch gekennzeichnet, daß die Trägerschicht aus Dispersionslegierung mit metallischer Matrix und eingelagerten aufschmelzbaren Dispersionsbestandteilen gebildet ist, wobei die Dispersionsbestandteile im Grenzbereich (18) der Trägerschicht (11) zur Funktionsschicht (12) in feindisperser Verteilung in die Matrix der pispersionslegierung eingefroren sind.

4. Schichtwerkstoff oder Schichtwerkstück nach Anspruch 3, dadurch gekennzeichnet, daß die Trägerschicht (11) aus aufgegossener oder aufgesinterter Bleibronze mit Bleigehalt bis zu 40 Gew.-% besteht.

5. Schichtwerkstoff oder Schichtwerkstück nach einem der Ansprüche 1 bis 4, dadurch gekennzeichnet, daß die Funktionsschicht (12) als Dispersionsschicht ausgebildet ist, deren Matrix mindestens einen der folgenden metallischen Bestandteile: Aluminium, Kupfer, Zink und deren Dispersionselemente mindestens einen der folgenden Bestandteile: Blei, Zinn, Indium, Wismut, Molybdän, Molydänsulfid, Bornitrid, Kohlenstoff, für tribologische Zwecke anwendbaren Kunststoff, wie Polyester, PTFE, PEK, PEEK, aufweisen.

6. Schichtwerkstoff oder Schichtwerkstück nach Anspruch 5, dadurch gekennzeichnet, daß die Funktionsschicht (12) auf eine Härte zwischen 40 HV und 120 HV eingestellt ist.

7. Schichtwerkstoff oder Schichtwerkstück nach einem der Ansprüche 1 bis 6, dadurch gekennzeichnet, daß die Funktionsschicht einen vorher festgelegten Anteil von beim Plasmaspritzen erzeugten chemischen und/oder quasichemischen Verbindungen von in ihr enthaltenen metallischen Bestandteilen aufweist, und zwar solchen chemischen und/oder quasichemischen Verbindungen, die härter als das jeweilige Metall sind.

8. Schichtwerkstoff oder Schichtwerkstück nach einem der Ansprüche 1 bis 7, dadurch gekennzeichnet, daß in die Funktionsschicht (12) Hartteilchen der Größe zwischen etwa 10 $\mu$m und 200 $\mu$m eingelagert sind, und zwar Hartteilchen aus der Gruppe TiC, WC, Glasmehl, $Si_3N_4$, SiC, $Al_2O_3$ und/oder Hartteilchen auf der Basis von Laves-Phasen ($AB_2$), wobei das Radius Verhältnis der A-Atome und B-Atome

$$r_A/r_B = 1,225$$

beträgt.

9. Schichtwerkstoff oder Schichtwerkstück nach einem der Ansprüche 1 bis 8, dadurch gekennzeichnet, daß zwischen der Trägerschicht (11) und der Funktionsschicht (12) eine Haftvermittlerschicht vorgesehen ist, die metallische Bestandteile enthält, die untereinander und/oder mit metallischen Bestandteilen der Trägerschicht (11) und/oder metallischen Bestandteilen der Funktionsschicht (12) exotherm reagieren.

10. Schichtwerkstoff oder Schichtwerkstück nach Anspruch 9, dadurch gekennzeichnet, daß die Haftvermittlerschicht einen oder mehrere der folgenden Bestandteile enthält: Molybdän, Nickel/Aluminium-Legierung, Nickel-Aluminid, Nickel/Chrom-Legierung, Nickel/Kupfer-Legierung, Reinaluminium, Aluminiumlegierung.

11. Schichtwerkstoff oder Schichtwerkstück nach Anspruch 9 oder 10, dadurch gekennzeichnet, daß die Haftvermittlerschicht als geschlossene Schicht durch Luftplasmaspritzen auf die die Funktionsschicht (12) aufnehmende Seite der Trägerschicht (11) aufgebracht ist.

12. Schichtwerkstoff oder Schichtwerkstück nach Anspruch 9 oder 10, dadurch gekennzeichnet, daß die Haftvermittlerschicht in Art eines Rauhgrundes als einfache Lage oder wenige Lagen von feinen Teilchen auf die die Funktionsschicht (12) aufnehmende Seite der Trägerschicht (11) aufgesintert ist.

13. Schichtwerkstoff oder Schichtwerkstück nach einem der Ansprüche 1 bis 12, dadurch gekennzeichnet, daß die Trägerschicht (11) in Art der Mittelschicht eines Dreischicht-Gleitlagers an ihrer einen Seite auf einem Substrat angebracht ist und an ihrer anderen Seite die in Art einer Gleitschicht oder Einlaufschicht ausgebildete Funktionsschicht (12) trägt.

14. Schichtwerkstoff oder Schichtwerkstück nach Anspruch 13, dadurch gekennzeichnet, daß der in Art einer Mittelschicht ausgebildete Teil (17, 27) der Trägerschicht (11) aus Bleibronze, Bleizinnbronze oder Zinnbronze und die als Gleitschicht oder Einlaufschicht ausgebildete Funktionsschicht (12) aus Dispersionslegierung auf Aluminium/Bleigrundlage oder Aluminium/Zinngrundlage bestehen, wobei die Funktionsschicht (12) eine Dicke zwischen etwa 10 $\mu$m und 100 $\mu$m aufweist.

15. Verfahren zum Herstellen von Schichtwerkstoff oder Schichtwerkstücken nach einem der Ansprüche 1 bis 14, bei dem die Funktionsschicht aus metallischer Dispersionslegierung oder mit anderer für tribologische Zwecke anwendbarer Struktur durch Luftplasmaspritzen aus feinem Werkstoffpulver gebildet wird, dadurch gekennzeichnet, daß die Funktionsschicht als Dispersionslegierung oder mit anderer für tribologische Zwecke anwendbarer Struktur in Luftplasmaspritzen direkt auf die Oberfläche der Trägerschicht oder auf einer vorher auf der Trägerschicht gebildeten Haftvermittlerschicht aufgetragen wird, wobei während des Plasmaspritzens der Abstand der Plasmaflamme von der zu belegenden Oberfläche in Abstimmung mit der verfügbaren Anlage-Leistung und der Art des jeweils verarbeiteten Werkstoffpulvers derart eingestellt und aufrechterhalten wird, daß das Metall der Trägerschicht in deren Oberflächenbereich auf eine Tiefe zwischen etwa 25 $\mu$m und etwa 300 $\mu$m durch die Plasmaflamme aufgeschmolzen wird, und daß ein sich unmittelbar an das Plasmaspritzen anschließendes Kühlen mit einer in der Spritzschicht und dem aufgeschmolzenen Bereich der Trägerschicht wirksamen hohen, im Hinblick auf die Schrumpfeigenschaften der Trägerschicht, der Haftvermittlerschicht und der gebildeten Funktionsschicht sowie deren gegenseitigen Bindungszonen zulässigen Abkühlrate (Abkühlgeschwindigkeit) zwischen $10^2$ K/s und $10^5$ K/s vorgenommen wird.

16. Verfahren nach Anspruch 16, dadurch gekennzeichnet, daß die Funktionsschicht durch Luftplasmaspritzen auf einem Pulvergemenge gebildet wird, das die aufschmelzbaren Matrixbestandteile und die in der Matrix zu verteilenden, in deren Werkstoff unlöslichen oder nur in geringerer als vorhandener Menge löslichen Bestandteile enthält.

17. Verfahren nach Anspruch 15 oder 16, dadurch gekennzeichnet, daß die Funktionsschicht durch Luftplasmaspritzen aus mit oder ohne organische Binder der agglomerierten Pulver (Mikropellets) gebildet wird, das die aufschmelzbaren Matrixbestandteile und die in deren Werkstoff unlöslichen oder nur in geringerer als vorhandener Menge löslichen Bestandteile enthält.

18. Verfahren nach Anspruch 16 oder 17, dadurch gekennzeichnet, daß das Pulvergemenge oder Pulveragglomerat mit Umhüllung versehene Pulverteilchen enthält.

19. Verfahren nach einem der Ansprüche 15 bis 18, dadurch gekennzeichnet, daß der Plasmaflamme Pulver unterschiedlicher Art ggf. an getrennten Stellen zugeführt werden.

20. Verfahren nach einem der Ansprüche 15 bis 19, dadurch gekennzeichnet, daß eine Funktionsschicht aus Dispersionslegierung mit Matrix aus Metall mindestens eines der folgenden Bestandteile:
Aluminium, Kupfer, Zink, Silber und Dispersionselementen mindestens eines der folgenden Bestandteile:
Blei, Zinn, Indium, Wismut, Nickel, Kupfer, Mangan, Silicium, Kohlenstoff, Molybdändisulfid, Bornitrid, Kunststoff, wie Polyester, PTFE, PEK PEEK auf eine durch eine Dispersionslegierung, vorzugsweise Bleibronze, Zinnbronze oder Bleizinnbronze gebildete Trägerschicht durch Luftplasmaspritzen aufgebracht wird und dabei das Kühlen mit einer Kühlrate zwischen $10^3$ K/s und $5 \cdot 10^4$ K/s vorgenommen wird.

21. Verfahren nach einem der Ansprüche 15 bis 20, dadurch gekennzeichnet, daß bei Einsatz von Werkstoffpulver mit harte Oxidteilchen und/oder Nitridteilchen bildenden Bestandteilen für das Plasmaspritzen der Funktionsschicht der beim Plasmaspritzen aufrechterhaltenen Massestrom und Zusammensetzung des Prozeßgases auf einen vorher bestimmten Umfang chemische Reaktion dieser Bestandteile mit der Umgebungsluft abgestimmt werden.

22. Verfahren nach einem der Ansprüche 15 bis 20, dadurch gekennzeichnet, daß bei Einsatz von Werkstoffpulver mit harte chemische Verbindungen mit gasförmigen Reaktionsstoffen bildenden Bestandteilen für das Plasmaspritzen der Funktionsschicht dem zur Bildung der Plasmaflamme eingesetzten Prozeßgas solche gasförmige Reaktionsstoffe in vorher festgelegten, auf den beim Plasmaspritzen aufrechterhaltenen Massestrom abgestimmter Menge zugemischt werden.

23. Verfahren nach einem der Ansprüche 15 bis 20, dadurch gekennzeichnet, daß dem Plasmaspritzen der Funktionsschicht eingesetzten Werkstoffpulver feine Hartteilchen mit Größe zwischen 10 $\mu$m und 200 $\mu$m in der für die Funktionsschicht vorgesehenen Menge beigemischt werden.

24. Verfahren nach Anspruch 23, gekennzeichnet durch den Einsatz von Hartteilchen der Gruppe: TiC, WC, SiC, Glasmehl, $S_3N_4$, $Al_2O_3$ als Beimischung zum Werkstoffpulver für das Plasmaspritzen der Funktionsschicht.

25. Verfahren nach Anspruch 23, gekennzeichnet durch den Einsatz von Hartteilchen auf der Basis von Laves-Phasen ($AB_2$), als Beimischung zum Werkstoffpulver für das Plasmaspritzen der Funktionsschicht.

26. Verfahren nach einem der Ansprüche 15 bis 25, dadurch gekennzeichnet, daß eine Haftvermittlerschicht in Art eines Rauhgrundes als eine oder weniger Lagen feiner Teilchen auf die durch Luftplasmaspritzen zu beschichtende Oberfläche der Trägerschicht gesintert wird.

27. Verfahren nach einem der Ansprüche 15 bis 25, dadurch gekennzeichnet, daß zunächst eine Haftvermittlerschicht durch Luftplasmaspritzen auf der mit der Funktionsschicht zu belegenden Oberfläche der Trägerschicht angebracht, dabei die Trägerschicht auf geringe Dicke zwischen 25 $\mu$m und 300 $\mu$m aufgeschmolzen und dabei eine Kühlung unter Einhaltung einer Kühlrate zwischen $10^2$ K/s und $10^5$ K/s vorgenommen wird.

**28.** Verfahren nach Anspruch 26 oder 27, dadurch gekennzeichnet, daß eine Haftvermittlerschicht angebracht wird, die metallische Bestandteile enthält, die untereinander und/oder mit metallischen Bestandteilen der Trägerschicht und/oder mit metallischen Bestandteilen der danach aufzubringenden Funktionsschicht exotherm reagieren.

**29.** Verfahren nach Anspruch 28, dadurch gekennzeichnet, daß eine Haftvermittlerschicht aus einem oder mehreren der folgenden Stoffe angebracht wird: Molybdän, Nickel/Aluminium-Legierung, Nickel/Chrom-Legierung, Nickel/Kupfer-Legierung, Reinaluminium, Aluminiumlegierung.

**30.** Verfahren nach einem der Ansprüche 15 bis 29, dadurch gekennzeichnet, daß ein die Trägerschicht aufweisendes Band fortlaufend unter Aufschmelzen der Trägerschicht auf geringe Tiefe von zwischen etwa 10 $\mu$m und 300 $\mu$m mit der Funktionsschicht durch Luftplasmaspritzen belegt und während dieses Bespritzens in wirksamer wärmeleitender Verbindung mit einer Kühlwalze gehalten wird.

**31.** Verfahren nach einem der Ansprüche 15 bis 29, dadurch gekennzeichnet, daß ein die Trägerschicht aufweisendes Band fortlaufend durch Luftplasmaspritzen unter Aufschmelzen der Trägerschicht auf eine geringe Tiefe von zwischen etwa 10 $\mu$m und 300 $\mu$m mit der Funktionsschicht belegt und während dieses Beschichtens mit seiner unbelegten Seite über einen Kühlkasten gezogen wird, in welchem Kühlmedium flüssiger und/oder gasförmiger Art auf die unbelegte Oberfläche des Bandes geführt wird.

**32.** Verfahren nach Anspruch 30 oder 31, dadurch gekennzeichnet, daß zusätzlich gasförmiges Kühlmedium auf die frisch gebildete Funktionsschicht geführt wird.

**Claims**

**1.** Multilayer material or part comprising a functional layer, particularly an overlay, applied on one surface of a firm backing layer, for instance {as} a firm dispersion layer with a matrix with at least one meltable component and dispersion elements which at least in solid state are not soluble in the material of the matrix or are in it soluble only in an amount smaller than the available one, or {of} another mixture, usable for tribological purposes, of components which are not soluble in each other or are soluble in each other only in an amount smaller than the available one, while the functional layer (12) is made as a solid dispersion layer with a matrix (13), the functional layer being formed by air plasma spraying from a fine powder containing the meltable components of the matrix and the dispersion components which are not soluble in the material of the matrix or are in it soluble only in an amount which is smaller than the available one, in which are distributed the dispersion elements as finely dispersely distributed particles (14) of components which are not dissolved in the material of the matrix, and this functional layer (12) is bonded directly or via a bonding layer (22) on the surface of the backing layer, characterised in that the backing layer (11) is obtained by direct cooling of the backing material melted during the air plasma spraying, at a cooling rate maintained between $10^2$ and $10^5$ K/s, and that the backing layer is formed in the border region (18) to the functional layer (12) at a small thickness of about 25 $\mu$m up to about 300 $\mu$m with a refined microstructure.

**2.** Multilayer material or parts according to Claim 1, characterised in that the backing layer (11) is made of metal and contains components which are not soluble in the metal of the backing layer (11) or are in it soluble only in an amount which is smaller than the available one, and that these components are embedded in the border region (18) to the functional layer (12) into the metal of the backing layer in substantially finer distribution that in the remaining part of the backing layer (11).

**3.** Multilayer material or parts according to Claim 2, characterised in that the backing layer is formed of a dispersion alloy with a metallic matrix and embedded meltable dispersion components, the dispersion components in the border region (18) between the backing layer (11) and the functional layer (12) being frozen in the matrix of the dispersion alloy in finely dispersed distribution.

**4.** Multilayer material or parts according to Claim 3, characterised in that the backing layer (11) is composed of melted-on or sintered-on lead bronze containing up to 40% by weight of lead.

**5.** Multilayer material or parts according to any one of Claims 1 to 4, characterised in that the functional layer (12) is formed as a dispersion layer the matrix of which contains at least one of the following metallic components: aluminium, copper, zinc, and the dispersion elements of which contain at least one of the following components: lead, tin, indium, bismuth, molybdenum, molybdenum sulphide, boron nitride, carbon, plastics usable for tribological purposes, such as polyester, PTFE, PEK, PEEK.

6. Multilayer material or parts according to Claim 5, characterised in that the functional layer (12) is adjusted so that its hardness lies between 40 HV and 120 HV.

7. Multilayer material or parts according to any one of Claims 1 to 6, characterised in that the functional layer contains a predetermined proportion of chemical and/or quasi-chemical components produced during plasma spraying from the metallic components contained therein, the chemical and/or quasi-chemical components being harder than the relevant metal.

8. Multilayer material or parts according to any one of Claims 1 to 7, characterised in that in the functional layer (12) are embedded hard particles the size of which is between about 10 $\mu$m and 200 $\mu$m, namely hard particles from the group: TiC, WC, glass powder, $Si_3N_4$, SiC, $Al_2O_3$ and/or hard particles based on Laves phases ($AB_2$), the radius proportion of the A-atoms and B-atoms being $r_A/r_B = 1.225$.

9. Multilayer material or parts according to any one of Claims 1 to 8, characterized in that a bonding layer is provided between the backing layer (11) and the functional layer (12), the backing layer containing metallic components which react exothermically with each other and/or with metallic components of the backing layer (11) and/or with metallic components of the functional layer (12).

10. Multilayer material or parts according to Claim 9, characterized in that the bonding layer contains one or more of the following components: molybdenum, a nickel-aluminium alloy, nickel-aluminid, a nickel-chromium alloy, a nickel-copper alloy, pure aluminium, an aluminium alloy.

11. Multilayer material or parts according to Claim 9 or 10, characterized in that the bonding layer is applied as a closed layer by air plasma spraying onto the side of the backing layer (11) which receives the functional layer (12).

12. Multilayer material or parts according to Claim 9 or 10, characterized in that the bonding layer is sintered in the manner of a rough ground as a single layer or few layers of fine particles onto the side of the backing layer (11) which receives the functional layer (12).

13. Multilayer material or parts according to any one of Claims 1 to 12, characterized in that the backing layer (11) is applied in the manner of a middle layer of a three-layer plain bearing on one of its sides onto a substrate and on its other side carries the functional layer (12) made in the manner of an overlay or running-in layer.

14. Multilayer material or parts according to Claim 13, characterized in that the part (17, 27) of the backing layer (11), formed in the manner of a middle layer, is composed of lead bronze, lead-tin bronze or tin bronze, and the functional layer (12), formed as an overlay or running-in layer, is composed of a dispersion alloy based on aluminium-lead or aluminium-tin the thickness of the functional layer (12) being between about 10 $\mu$m and 100 $\mu$m.

15. Method for the manufacture of multilayer material or parts according to any one of claims 1 to 14 in which the functional layer is formed of a metallic dispersion alloy or {with} other structure usable for tribological purposes by air plasma spraying from a fine powder, characterised in that the functional layer is applied as a dispersion alloy or {with} other structure usable for tribological purposes by air plasma spraying directly onto the surface of the backing layer or onto a bonding layer formed previously on the backing layer, while during the plasma spraying the distance of the plasma flame from the surface to be coated is so set and maintained in agreement with the available device output and the kind of the powder processed at the time, that the metal of the backing layer is in its surface region melted by the plasma flame to a thickness between about 25 $\mu$m and about 300 $\mu$m and that immediately after the plasma spraying cooling at a high cooling rate of between $10^2$ K/s and $10^5$ K/s is performed, active in the spraying layer and the melted region of the backing layer, the cooling rate being a rate permissible having regard to the shrinking properties of the backing layer, of the bonding layer and of the functional layer being formed and also of their mutual binding zones.

16. Method according to claim {16} [15], characterised in that the functional layer is formed by air plasma spraying {on} [from] a powder mixture which contains the meltable matrix components and the components to be distributed in the matrix which are not soluble in its material or are in it soluble only in an amount which is smaller than the available one.

17. Method according to claim 15 or 16, characterised in that the functional layer is formed by air plasma spraying from a powder (micropellets) agglomerated with or without inorganic binder, the powder containing the meltable matrix components and the components which are not soluble in its material or are in it soluble only in an amount which is smaller than the available one.

18. Method according to claim 16 or 17, characterised in that the powder mixture or powder agglomerate contains powder particles provided with coating.

19. Method according to any one of claims 15 to 18, characterised in that powders of different kinds are supplied to the plasma flame possibly at different places.

20. Method according to any one of claims 15 to 19, characterised in that a functional layer of a dispersion alloy with a matrix of a metal of at least one of the following components: aluminium, copper, zinc, silver and dispersion elements of at least one of the following components: lead, tin, indium, bismuth, nickel, copper, manganese, silicon, carbon, molybdenum sulphide, boron nitride, plastics such as polyester, PTFE, PEK, PEEK, is applied by air plasma spraying onto a backing layer formed by a dispersion alloy, preferably lead bronze, tin bronze or lead-tin bronze, and cooling is performed during this process at a cooling rate between $10^3$ K/s and $5 \times 10^4$ K/s.

21. Method according to any one of claims 15 to 20, characterised in that when powder containing components forming hard oxide particles and/or nitride particles is used for the plasma spraying of the functional layer the mass flow rate maintained during plasma spraying and the composition of the process gas are adjusted to a predetermined scope of chemical reaction of these components with the ambient air.

22. Method according to any one of claims 15 to 20, characterised in that when powder containing components forming hard chemical components with gaseous reaction substances is used for the plasma spraying of the functional layer such gaseous reaction substances are added to the process gas used for producing the plasma flame in a predetermined amount adjusted to the stream of matter maintained during plasma spraying.

23. Method according to any one of claims 15 to 20, characterised in that fine hard particles of a size between 10 $\mu$m and 200 $\mu$m are added to the powder used [for] the plasma spraying of the functional layer in the {amount} [mixture] provided for the functional layer.

24. Method according to claim 23, characterised by the use of hard particles from the group: Tic, WC, SiC, glass powder, $S_3N_4$, $Al_2O_3$ as an additive to the powder for the plasma spraying of the functional layer.

25. Method according to claim 23, characterised by the use of hard particles based on Laves phases ($AB_2$), as an additive to the powder for plasma spraying of the functional layer.

26. Method according to any one of claims 15 to 25, characterised in that a bonding layer in the manner of a rough ground is sintered as one or few layers of fine particles onto the surface of the backing layer to be coated by air plasma spraying.

27. Method according to any one of claims 15 to 25, characterised in that first a bonding layer is applied by air plasma spraying onto the surface of the backing layer to be coated by the functional layer, and the backing layer is melted to a small thickness between 25 $\mu$m and 300 $\mu$m and during the process cooling takes place in which a cooling rate of between $10^2$ K/s and $10^5$ K/s is maintained.

28. Method according to claim 26 or 27, characterised in that a bonding layer is applied which contains metallic components which react exothermically with each other and/or with metallic components of the backing layer and/or with metallic components of the functional layer to be subsequently applied.

29. Method according to claim 28, characterised in that a bonding layer is applied which is composed of one or more of the following substances: molybdenum, a nickel-aluminium alloy, a nickel-chromium alloy, a nickel-copper alloy, pure aluminium, an aluminium alloy.

30. Method according to any one of claims 15 to 29, characterised in that a strip containing the backing layer is continuously coated by air plasma spraying with the functional layer while the backing layer is melted to a small thickness of between about 10 μm and 300 μm, and is during this spraying kept at efficient heat transferring contact with a cooling roller.

31. Method according to any one of claims 15 to 29, characterised in that a strip containing the backing layer is continuously coated by air plasma spraying with the functional layer while the backing layer is melted to a small thickness of between about 10 μm and 300 μm, and is during this coating pulled by its uncoated side over a cooling box in which a liquid and/or gaseous cooling medium is supplied to the uncoated surface of the strip.

32. Method according to claim 30 or 31, characterised in that additionally a gaseous cooling medium is supplied to the freshly formed functional layer.

**Revendications**

1. Matériau stratifié ou pièce stratifiée présentant une couche fonctionnel le déposée sur l'une des surfaces d'une couche solide de support, en particulier une couche de glissement revêtant, par exemple, la forme d'une couche d'une dispersion solide munie d'une matrice comprenant au moins un composant fusible et des éléments de dispersion qui, au moins à l'état solide, sont insolubles dans le matériau de la matrice ou sont solubles uniquement en une quantité moindre que la quantité présente, ou bien consistant en un autre mélange utilisable à des fins tribologiques et constitué de composants qui sont insolubles su solubles uniquement en une quantité moindre que la quantité présente, la couche fonctionnelle (12), formée par injection d'air-plasma à partir d'une fine poudre renfermant les composants fusibles de la matrice et les composants de dispersion non solubles dans le matériau de la matrice, ou solubles uniquement en une quantité moindre que la quantité présente, étant réalisée en tant que couche de dispersion solide présentant une matrice (13) dans laquelle les éléments de dispersion sont répartis sous la forme de particules (14) finement dispersées et provenant de composants non dissous dans le matériau de la matrice, et cette couche fonctionnelle (12) étant liée, sur la surface de la couche de support, directement ou par l'intermédiaire d'une couche (22) d'un agent adhésif, caractérisé(e) par le fait que la couche de support (11) est obtenue par refroidissement direct du matériau substrat fondu par la flamme plasmatique lors de l'injection d'air-plasma, avec une vitesse de refroidissement comprise entre $10^2$ et $10^5$ K/s ; et par le fait que la couche de support est conçue munie d'une structure affinée dans la zone limite (18) avec la touche fonctionnelle (12), avec faible épaisseur comprise entre environ 25 μm et environ 300 μm.

2. Matériau stratifié ou pièce stratifiée selon la revendication 1, caractérisé(e) par le fait que la couche de support (11) consiste en un métal et renferme des composants qui sont insolubles dans le métal de la couche de support (11), ou solubles uniquement en une quantité moindre que la quantité présente ; et par le fait que ces composants sont intégrés dans le métal de la couche de support selon une répartition notablement plus fine, dans la zone limite (18) avec la couche fonctionnelle (12), que dans la partie restante de la couche de support (11).

3. Matériau stratifié ou pièce stratifiée selon la revendication 2, caractérisé(e) par le fait que la couche de support est formée d'un alliage dispersif comprenant une matrice métallique et des composants de dispersion fusibles et intégrés, les composants de dispersion étant figés dans la matrice de l'alliage dispersif, dans la zone limite (18) de la couche de support (11) avec la touche fonctionnelle (12), selon une répartition finement dispersée.

4. Matériau stratifié ou pièce stratifiée selon la revendication 3, caractérisé(e) par le fait que la couche de support (11) consiste en un alliage cuivre-plomb coulé ou fritté, avec une teneur en plomb atteignant jusqu'à 40 % en poids.

5. Matériau stratifié ou pièce stratifiée selon l'une des revendications 1 à 4, caractérisé(e) par le fait que la couche fonctionnelle (12) est conçue sous la forme d'une couche de dispersion dont la matrice présente au' moins l'un des composants métalliques suivants :
aluminium, cuivre, zinc,
et dont les éléments de dispersion présentent au moins l'un des composants suivants :
plomb, étain, indium, bismuth, molybdène, sulfure de molybdène, nitrure de bore, carbone, matière plastique utilisable à des fins tribologiques, telle que du polyester, du PTFE, du PEK, du PEEK.

6. Matériau stratifié ou pièce stratifiée selon la revendication 5, caractérisé(e) par le fait que la couche fonctionnelle (12) est réglée sur une dureté comprise entre 40 HV et 120 HV.

7. Matériau stratifié ou pièce stratifiée selon l'une des revendications 1 à 6, caractérisé(e) par le fait que la couche fonctionnelle présente une proportion préétablie de combinaisons chimiques et/ou quasi chimiques, engendrées lors de l'injection de plasma, de composants métalliques renfermés par ladite couche, plus précisément des combinaisons chimiques et/ou quasi chimiques qui sont plus dures que le métal considéré.

8. Matériau stratifié ou pièce stratifiée selon l'une des revendications 1 à 7, caractérisé(e) par le fait que des particules dures, de grosseur comprise entre environ 10 $\mu$m et 200 $\mu$m, sont intégrées dans la couche fonctionnelle (12), plus précisément des particules dures du groupe TiC, WC, verre pulvérisé, $Si_3N_4$, SiC, $Al_2O_3$, et/ou des particules dures à base de phases Laves ($AB_2$), le rapport entre les rayons des atomes A et des atomes B étant exprimé par

$$r_A/r_B = 1,225.$$

9. Matériau stratifié ou pièce stratifiée selon l'une des revendications 1 à 8, caractérisé(e) par le fait qu'une couche d'un agent adhésif, prévue entre la couche de support (11) et la couche fonctionnelle (12), renferme des composants métalliques qui entrent en réaction exothermique les uns avec les autres et/ou avec des composants métalliques de la couche de support (11) et/ou avec des composants métalliques de la couche fonctionnelle (12).

10. Matériau stratifié ou pièce stratifiée selon la revendication 9, caractérisé(e) par le fait que la couche d'agent adhésif renferme l'un ou plusieurs des composants suivants : molybdène, alliage nickel/aluminium, aluminure de nickel, alliage nickel/chrome, alliage nickel/cuivre, aluminium pur, alliage d'aluminium.

11. Matériau stratifié ou pièce stratifiée selon la revendication 9 ou 10, caractérisé(e) par le fait que la couche d'agent adhésif est déposée par injection d'air-plasma, sous la forme d'une couche fermée, sur la face de la couche de support (11) qui reçoit la couche fonctionnelle (12).

12. Matériau stratifié ou pièce stratifiée selon la revendication 9 ou 10, caractérisé(e) par le fait que la couche d'agent adhésif est frittée à la manière d'un fond rugueux, sous la forme d'une simple strate ou d'un nombre restreint de strates de particules fines, sur la face de la couche de support (11) qui reçoit la couche fonctionnelle (12).

13. Matériau stratifié ou pièce stratifiée selon l'une des revendications 1 à 12, caractérisé(e) par le fait que la couche de support (11) est déposée sur un substrat, par l'une de ses faces à la manière de la couche médiane d'un palier de glissement à trois couches, et porte, sur son autre face, la couche fonctionnelle (12) réalisée à la manière d'une couche de glissement ou d'une couche de rodage.

14. Matériau stratifiè ou pièce stratifiée selon la revendication 13, caractérisé(e) par le fait que la partie (17, 27) de la couche de support (11), qui est réalisée à la manière d'une couche médiane, consiste en un alliage cuivre-plomb, en un alliage cupro-plomb à l'étain ou en du bronze ordinaire, et la couche fonctionnelle (12) réalisée en tant que couche de glissement ou couche de rodage consiste en un alliage dispersif à base d'aluminium/plomb ou à base d'aluminium/étain, la couche fonctionnelle (12) présentant une épaisseur comprise entre environ 10 $\mu$m et 100 $\mu$m.

15. Procédé de fabrication d'un matériau stratifié ou de pièces stratifiées selon l'une des revendications 1 à 14, dans lequel la couche fonctionnelle, constituée d'un alliage dispersif métallique ou présentant une autre structure utilisable à des fins tribologiques, est formée par injection d'air-plasma à partir d'une fine poudre de matériau, caractérisé par le fait que la couche fonctionnelle consistant en un alliage dispersif ou présentant une autre structure utilisable à des fins tribologiques est déposée, par injection d'air-plasma, directement sur la surface de la couche de support ou sur une couche d'un agent adhésif, préalablement formée sur la couche de support, procédé dans lequel, au cours de l'injection de plasma, la distance séparant la flamme plasmatique de la surface devant être garnie est réglée et conservée, en concordance avec la puissance disponible de l'installation et avec la nature de la poudre de matériau respectivement travaillée, de telle sorte que le métal de la couche de support soit fondu par la flamme plasmatique, dans la région superficielle de ladite couche, jusqu'à une profondeur comprise entre environ 25 $\mu$m et environ 300 $\mu$m ; et par le fait que, dans l'enchaînement direct de l'injection de plasma, un refroidissement s'opère avec une grande vitesse de refroidissement comprise entre $10^2$ K/s et $10^5$ K/s qui agit efficacement dans la couche injectée et dans la région fondue de la couche de support, et est compatible avec les propriétés de rétraction de la couche de support, de la couche d'agent adhésif et de la couche fonctionnelle formée, ainsi que des zones de liaison mutuelle de ces dernières.

16. Procédé selon la revendication 15, caractérisé par le fait que la couche fonctionnelle est formée, par injection d'air-plasma, sur un mélange de poudres qui renferme les composants fusibles de la matrice et les composants qui doivent être répartis dans la matrice, sont insolubles dans le matériau de cette dernière ou sont solubles uniquement en une quantité moindre que la quantité présente.

17. Procédé selon la revendication 15 ou 16, caractérisé par le fait que la couche fonctionnelle est formée, par injection d'air-plasma, à partir d'une poudre (micropastilles) qui est agglomérée avec ou sans liants organiques et qui renferme les composants fusibles de la matrice et les composants qui sont insolubles dans le matériau de cette dernière, ou sont solubles uniquement en une quantité moindre que la quantité présente.

18. Procédé selon la revendication 16 ou 17, caractérisé par le fait que le mélange de poudres ou l'agglomérat de poudre renferme des particules de poudre munies d'une enveloppe.

19. Procédé selon l'une des revendications 15 à 18, caractérisé par le fait que des poudres de natures différentes sont présentées à la flamme plasmatique, éventuellement en des emplacements séparés.

20. Procédé selon l'une des revendications 15 à 19, caractérisé par le fait qu'une couche fonctionnelle, en un alliage dispersif comprenant une matrice en métal d'ou moins l'un des composants suivants :
aluminium, cuivre, zinc, argent,
et des éléments de dispersion d'au moins l'un des composants suivants :
plomb, étain, indium, bismuth, nickel, cuivre, manganèse, silicium, carbone, sulfure de molybdène, nitrure de bore, matière plastique telle que du polyester, du PTFE, du PEK, du PEFK, est déposée, par injection d'air-plasma, sur une couche de support constituée d'un alliage dispersif, de préférence d'un alliage cuivre-plomb, de bronze ordinaire ou d'un alliage cupro-plomb à l'étain, le refroidissement s'opérant alors a une vitesse de refroidissement comprise entre $10^3$ K/s et $5 . 10^4$ K/s.

21. Procédé selon l'une des revendications 15 à 20, caractérisé par le fait que lorsqu'on utilise, pour l'injection au plasma de la couche fonctionnelle, une poudre de matériau présentant des composants qui forment des particules d'oxyde dures et/ou des particules de nitrure, le débit massique et la composition du gaz de traitement, entretenus lors de l'injection de plasma, sont coordonnés avec une réaction chimique d'ampleur prédéterminée de ces composants avec l'air environnant.

22. Procédé selon l'une des revendications 15 à 20, caractérisé par le fait que lorsqu'on utilise, pour l'injection au plasma de la couche fonctionnelle, une poudre de matériau présentant des composants qui forment des combinaisons chimiques dures avec des substances réactives gazeuses, de telles substances réactives gazeuses sont ajoutées, au gaz de traitement utilisé pour former la flamme plasmatique, en une quantité préétablie et coordonnée avec le débit massique entretenu lors de l'injection de plasma.

23. Procédé selon l'une des revendications 15 à 20, caractérisé par le fait que de fines particules dures, de grosseur comprise entre 10 $\mu$m et 200 $\mu$m, sont ajoutées à la poudre de matériau utilisée pour l'injection au plasma de la couche fonctionnelle, selon la quantité prévue pour la couche fonctionnelle,

24. Procédé selon la revendication 23, caractérisé par l'utilisation de particules dures du groupe : TiC, WC, SiC, verre pulvérisé, $S_3N_4$, $Al_2O_3$ en tant qu'adjonction à la poudre de matériau destinée à l'injection au plasma de la couche fonctionnelle.

25. Procédé selon la revendication 23, caractérisé par l'utilisation de particules dures à base de phases Laves ($AB_2$), en tant qu'adjonction à la poudre de matériau destinée à l'injection au plasma de la couche fonctionnelle.

26. Procédé selon l'une des revendications 15 à 25, caractérisé par le fait qu'une couche d'un agent adhésif est frittée à la manière d'un fond rugueux, sous la forme d'une strate ou d'un nombre restreint de strates de fines particules, sur la surface de la couche de support devant être revêtue par injection d'air-plasma.

27. Procédé selon l'une des revendications 15 à 25, caractérisé par le fait qu'une couche d'agent adhésif est tout d'abord déposée, par injection d'air-plasma, sur la surface de la couche de support devant être garnie de la couche fonctionnelle, la couche de support étant alors fondue jusqu'a prendre une faible épaisseur comprise entre 25 $\mu$m et 300 $\mu$m, et un refroidissement s'opérant simultanément avec maintien d'une vitesse de refroidissement comprise entre $10^2$ K/s et $10^5$ K/s.

28. Procédé selon la revendication 26 ou 27, caractérisé par le dépôt d'une couche d'agent adhésif renfermant des composants métalliques qui entrent en réaction exothermique les uns avec les autres et/ou avec des composants métalliques de la couche de support et/ou avec des composants métalliques de la couche fonctionnelle devant être déposée à un stade ultérieur.

29. Procédé selon la revendication 28, caractérisé par le dépot d'une couche d'agent adhésif constituée de l'une ou plusieurs des substances suivantes : molybdène, alliage de nickel/aluminium, alliage de nickel/chrome, alliage de nickel/cuivre, aluminium pur, alliage d'aluminium.

30. Procédé selon l'une des revendications 15 à 29, caractérisé par le fait qu'une bande, présentant la couche de support, est garnie en continu de la couche fonctionnelle, par injection d'air-plasma, en faisant fondre la couche de support jusqu'a une faible profondeur comprise entre environ 10 $\mu$m et 300 $\mu$m, et est maintenue, durant cette injection, en liaison thermoconductrice efficace avec un cylindre de refroidissement.

31. Procédé selon l'une des revendications 15 à 29, caractérisé par le fait qu'une bande, présentant la couche de support, est garnie en continu de la couche fonctionnelle, par injection d'air-plasma, en faisant fondre la couche de support jusqu'à une faible profondeur comprise entre environ 10 $\mu$m et 300 $\mu$m, et est dévidée durant ce revétement, par sa face non garnie, pour parcourir un caisson de refroidissement dans lequel un agent de refroidissement, de type liquide et/ou gazeux, est dirigé sur la surface non garnie de la bande.

32. Procédé selon la revendication 30 ou 31, caractérisé par le fait qu'un agent gazeux de refroidissement est additionnellement dirigé sur la couche fonctionnelle fraichement formée.

Fig. 1

Fig. 2

Fig. 3

**Fig. 4**